# EUROPEAN PATENT SPECIFICATION

(11) **EP 4 092 785 B1**
(45) Date of publication and mention of the grant of the patent: **05.11.2025**
(21) Application number: 21740650.3
(22) Date of filing: 15.01.2021
(51) Int. Cl.: H01M 4/36, H01M 4/38, C01B 32/198, C01B 33/02, H01M 4/04, H01M 4/62, H01M 10/0525

(54) **MICRON SILICON-CARBON COMPOSITE NEGATIVE ELECTRODE MATERIAL, PREPARATION METHOD THEREFOR, NEGATIVE ELECTRODE PLATE, AND LITHIUM ION BATTERY**
NEGATIVES ELEKTRODENMATERIAL AUS MIKRONSILIZIUM-KOHLENSTOFF-VERBUND, HERSTELLUNGSVERFAHREN DAFÜR, NEGATIVE ELEKTRODENPLATTE UND LITHIUM-IONEN-BATTERIE
MATÉRIAU D'ÉLECTRODE NÉGATIVE COMPOSITE DE SILICIUM-CARBONE MICROMÉTRIQUE, SON PROCÉDÉ DE PRÉPARATION, PLAQUE D'ÉLECTRODE NÉGATIVE ET BATTERIE AU LITHIUM-ION

(30) Priority: 17.01.2020 CN 202010052236
(43) Date of publication of application: 23.11.2022
(73) Proprietor: Zettawatt Energy (Changzhou) Technology Co., Ltd, Changzhou City, Jiangsu Province (CN)
(72) Inventor: YANG, Quanhong, Shenzhen, Guangdong 518055 (CN); CHEN, Fanqi, Shenzhen, Guangdong 518055 (CN); HAN, Junwei, Shenzhen, Guangdong 518055 (CN); XIAO, Jing, Shenzhen, Guangdong 518055 (CN); KONG, Debin, Shenzhen, Guangdong 518055 (CN); TAO, Ying, Shenzhen, Guangdong 518055 (CN)
(74) Representative: Zaboliene, Reda
(86) International application number: PCT/CN2021/072182
(87) International publication number: WO 2021/143855

(56) References cited:
- CN-A- 106 058 181
- CN-A- 106 058 181
- CN-A- 106 784 768
- CN-A- 108 023 084
- CN-A- 108 400 294
- CN-A- 109 449 385
- CN-A- 109 755 520
- CN-A- 109 841 803
- CN-A- 111 244 417
- JP-A- 2015 115 137

## Description

### FIELD

The subject matter herein generally relates to batteries, and more particularly, to a composite anode material of micrometer-sized carbon-coated silicon, a preparation method of the composite anode material, an anode, and a lithium-ion battery.

### BACKGROUND

As a new generation of anode material for lithium-ion batteries, silicon has rich reserves, and its theoretical specific capacity of lithium storage is the highest among all alloy-type elements that can store lithium. Therefore, silicon has a great potential to replace graphite as the anode material for commercial lithium-ion batteries. Nowadays, significant achievements have been made in the research of silicon anodes. However, applications of nanotechnology, including the use of nano-sized silicon as an active material to prepare electrode materials, reduce a tap density of the electrode materials and an electrode density. Thus, nano-sized silicon limits the improvement of volumetric performances of the silicon anodes.

Micrometer-sized silicon, which has an average particle size of 3 µm to 5 µm, has the characteristics of a low cost and a high tap density. Thus, micrometer-sized silicon can effectively avoid the inherent defects of nano-sized silicon. However, with the increase of particle size, the ability of the active particles to effectively buffer interior stress decreases. Studies have shown that the silicon active particles, when having a particle size exceeding 150 nm, will break into smaller nanoparticles under the interior stress during charging and discharging processes. Thus, some active particles may lose electrical contact therebetween. Also, a specific surface area of the active particles increase, and fresh particle surfaces of silicon are exposed outside. Thus, an SEI film may repeatedly grow on the exposed surface, which seriously restricts the cycle stability.

Furthermore, an existing carbon coating cannot effectively ensure the cycle stability of the micrometer-sized silicon anode. This is because the volume of silicon greatly expands during the cycle process. On the one hand, the expansion of silicon is anisotropic. For the micrometer-sized silicon particles with different sizes, it is difficult to accurately design the space for buffering the volume expansion of each particle. On the other hand, the above space causes the silicon material difficult to maintain structural integrity during a calendering of the electrode.

CN108023084A discloses a method for preparing a silicon carbon negative electrode material is characterized by comprising:
A) chemical vapour deposition of the catalyst precursor and the carbon source to obtain a catalyst coated with a graphene layer;
B) etching the catalyst coated with graphene layer with acid to separate the graphene cage material;
C) Grinding the graphene cage material and the nano silicon ball and drying to obtain the precursor material;
D) Chemical vapour deposition of a precursor material and a carbon source to obtain a silicon carbon negative electrode material.

CN106058181A discloses a method for preparing a graphene-supported carbon-coated silicon nanoparticle composite electrode material, comprising the steps of:
- Mixing the phenolic resin prepolymer with a surfactant to obtain a carbon precursor polymer A;
- Dispersing nano-silicon in the carbon precursor polymer A to obtain a mixture B;
- The mixture B is hydrothermally treated at 90 to 180 °C to obtain a composite C;
- Adding graphene oxide or graphene to the composite C, and dispersing uniformly to obtain a mixture D;
- The mixture D is subjected to a hydrothermal reaction at 90 to 180 °C, followed by solid-liquid separation, and the solid portion is collected to obtain a precursor E;
- The precursor E is heat-treated at 500 to 900 °C in a mixed atmosphere containing hydrogen and argon, wherein the phenolic resin is subjected to high-temperature carbonization to form a uniformly distributed carbon coating layer on the surface of the silicon to finally obtain the graphene.

CN106784768A discloses a method for preparing a silicon-carbon negative electrode composite material, which comprises the following steps:
- A certain proportion of silicon powder and carbon source are dispersed in deionized water, stirring for some time, transferred to the polytetrafluoroethylene reactor, by hydrothermal method in the silicon powder coated carbon precursor, and then calcined in an inert atmosphere;
- The material after calcination of the step (1) is dispersed in the mixed solution a and then subjected to a drying treatment;
- The dried material of step (2) is etched with an etching solution, and the etched material is dried to obtain a final silicon-carbon negative electrode composite material.

### SUMMARY

Therefore, the present application provides a preparation method of a composite anode material of micrometer-sized carbon-coated silicon. The composite anode material prepared by the above method not only can effectively buffer the volume expansion of internal micrometer-sized silicon particles, but also can bear the pressure of an external calendering.

In addition, the present application also provides a composite anode material prepared by the above method.

In addition, the present application also provides an anode including the composite anode material.

In addition, the present application also provides a lithium-ion battery including the anode.

The present application provides a preparation method of a composite anode material, the preparation method includes the following steps:
subjecting micrometer-sized silicon particles to a chemical vapor deposition reaction under a gas atmosphere containing carbon to obtain carbon-coated first micrometer-sized silicon particles, wherein a mass ratio of carbon in the carbon-coated first micrometer-sized silicon particles is 7% to 38%;
dispersing the carbon-coated first micrometer-sized silicon particles in a first mixed solvent to obtain a dispersed solution;
adding alkali into the dispersed solution and heating the dispersed solution, causing the alkali to etch a portion of the micrometer-sized silicon particles inside the carbon-coated first micrometer-sized silicon particles to obtain carbon-coated second micrometer-sized silicon particles;
dispersing the carbon-coated second micrometer-sized silicon particles and graphene oxide in a second mixed solvent to obtain a mixed solution, and subjecting the mixed solution to a hydrothermal reaction to obtain a composite hydrogel of reduced graphene oxide, carbon, and silicon; and
heating the composite hydrogel to remove water from the composite hydrogel, thereby obtaining the composite anode material.

The present application also provides a composite anode material prepared by the above-described preparation method. A density of the composite anode material is 0.8 g/cm³ to 1.2g/cm³.

The present application also provides an anode, which includes the above composite anode material.

The present application also provides a lithium-ion battery, which includes a cathode and the above anode.

The composite anode material prepared by the above method of the present application has a multilayered buffer structure. The composite anode material not only can effectively buffer the volume expansion of the internal micrometer-sized silicon particles, but also can bear the pressure of external calendering. Thus, the anode and the lithium-ion battery prepared by the composite anode material have a long cycle life.

### BRIEF DESCRIPTION OF THE DRAWINGS

FIG. 1 shows a Transmission Electron Microscope (TEM) diagram and an Energy Disperse Spectroscopy (EDS) spectrum of carbon-coated first micrometer-sized silicon particles prepared in example 1 of the present application.
FIG. 2 shows a TEM diagram and an EDS spectrum of carbon-coated first micrometer-sized silicon particles prepared in comparative example 3 of the present application.
FIG. 3 is a Scanning Electron Microscope (SEM) diagram of a composite anode material of micrometer-sized carbon-coated silicon prepared in example 1 of the present application.
FIG. 4 is a TEM diagram of the composite anode material prepared in example 1 of the present application.
FIG. 5 is a diagram showing cycle performances of lithium-ion batteries prepared from micrometer-sized silicon particles, carbon-coated second micrometer-sized silicon particles, and the composite anode material obtained at different steps of example 1 of the present application.

### DETAILED DESCRIPTION

Implementations of the disclosure will now be described, by way of embodiments only, with reference to the drawings. The disclosure is illustrative only, and changes may be made in the detail within the principles of the present application. It will, therefore, be appreciated that the embodiments may be modified within the scope of the claims.

Unless otherwise defined, all technical terms used herein have the same meaning as commonly understood by one of ordinary skill in the art. The technical terms used herein are not to be considered as limiting the scope of the embodiments.

Implementations of the disclosure will now be described, by way of embodiments only, with reference to the drawings.

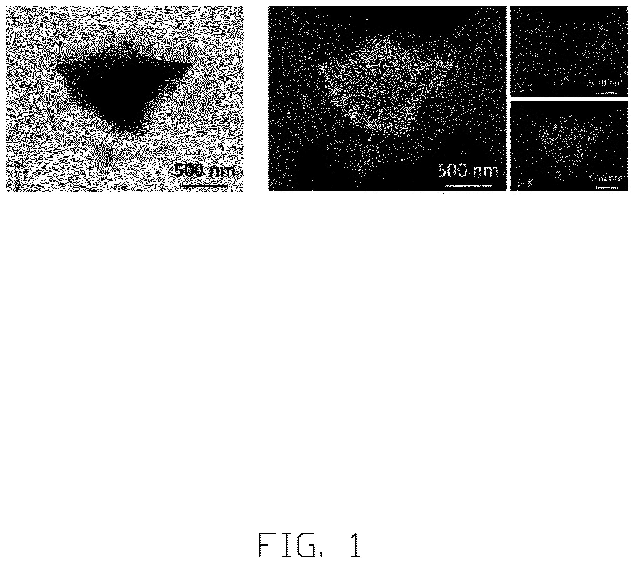

Referring to FIG. 1, a preparation method of a composite anode material of micrometer-sized carbon-coated silicon is provided according to some embodiments of the present application, the preparation method includes the following steps.

In step S11, micrometer-sized silicon particles are subjected to a chemical vapor deposition reaction under a gas atmosphere containing carbon. Then, carbon-coated first micrometer-sized silicon particles are obtained. A mass ratio of carbon in the carbon-coated first micrometer-sized silicon particles is 7% to 18%.

Specifically, the micrometer-sized silicon particles that have a particle size ranging from 3 µm to 5 µm are placed in a container. The container containing the micrometer-sized silicon particles is placed in a reaction receptacle, in which the micrometer-sized silicon particles are subjected to the chemical vapor deposition reaction under the gas atmosphere containing carbon. Thus, the carbon-coated first micrometer-sized silicon particles are obtained.

In some embodiments, the gas atmosphere containing carbon is methane.

In some embodiments, the container is a crucible.

In some embodiments, the reaction receptacle is a tubular furnace.

In some embodiments, the chemical vapor deposition reaction includes the following three stages:

A heating stage, which is performed under an argon atmosphere. A flow rate of argon is 30 ml/min to 50 ml/min, and a heating rate is 5 °C/min to 10 °C/min.

A constant temperature stage, which is performed under a mixed atmosphere of methane and argon. A flow rate of methane is 30 ml/min to 50 ml/min, and a flow rate of argon is 30 ml/min to 50 ml/min. The constant temperature is 900 °C to 1000 °C, and a period for the constant temperature state is 40 min and 60 min.

A cooling stage, which is performed under an argon atmosphere. A flow rate of argon is 30 ml/min to 50 ml/min. A cooling rate is 5 °C/min to 10 °C/min. A natural cooling is followed. In the cooling stage, the natural cooling is performed after the temperature is cooled to 400 °C.

Compared with a carbon coating obtained by a polymer pyrolysis process, a carbon coating obtained by chemical vapor deposition (i.e., the carbon of the carbon-coated first micrometer-sized silicon particles) has a higher degree of graphitization, so that the conductivity and mechanical properties are better.

In step S12, the carbon-coated first micrometer-sized silicon particles are dispersed in a first mixed solvent to obtain a dispersed solution.

Specifically, the carbon-coated first micrometer-sized silicon particles are ultrasonically dispersed in the first mixed solvent. Thus, the dispersed solution is uniform.

In some embodiments, the first mixed solvent is a mixture of water and ethanol. In the first mixed solvent, a volume ratio of water to ethanol can be in a range of 0.8:1 to 1:1. The ethanol in the first mixed solvent can disperse the carbon-coated first micrometer-sized silicon particles, and the water in the first mixed solvent can dissolve the alkali subsequently added.

In the dispersed solution, a concentration of the carbon-coated first micrometer-sized silicon particles is 1 mg/ml to 3 mg/ml.

In step S13, alkali is added to the dispersed solution and heated, so that the alkali etches a portion of the micrometer-sized silicon particles inside the carbon-coated first micrometer-sized silicon particles. Then, carbon-coated second micrometer-sized silicon particles are obtained.

Specifically, the alkali is added to the dispersed solution, and the dispersed solution is heated to allow the alkali to etch a portion of the micrometer-sized silicon particles. Hydrogen generated during the etching escapes from the dispersed solution. The micrometer-sized silicon particles may be etched by different etching degrees when a period of the reaction is adjusted. Then, the dispersed solution is ultrasonically treated and filtered. The filtered residue is washed and dried, thereby obtaining the carbon-coated second micrometer-sized silicon particles.

The etching process can generate gaps between the carbon coating and the micrometer-sized silicon particles. That is, a suitable space generates between the carbon coating and the micrometer-sized silicon particles. The space can buffer the volume expansion of the micrometer-sized silicon particles.

In some embodiments, the alkali includes at least one of sodium hydroxide and potassium hydroxide. A concentration of the alkali in the dispersed solution is 0.5 mol/l to 1 mol/l.

In some embodiments, a heating temperature of the dispersed solution is 70 °C to 80 °C.

In some embodiments, a period for the ultrasonic treatment is 4 min to 10 min.

In some embodiments, water and ethanol are alternately used during the washing procedure.

In some embodiments, a drying temperature is 70 °C to 80 °C.

In step S14, the carbon-coated second micrometer-sized silicon particles and a graphene oxide are dispersed in a second mixed solvent, so that a mixed solution is obtained. The mixed solution is subjected to a hydrothermal reaction to obtain a composite hydrogel of reduced graphene oxide, silicon, and carbon.

In detail, the carbon-coated second micrometer-sized silicon particles and the graphene oxide are ultrasonically dispersed in the second mixed solvent to obtain the mixed solution. Then, the mixed solution is added into a hydrothermal reactor, and the hydrothermal reaction is performed therein. The graphene oxide is reduced to obtain the composite hydrogel.

In some embodiments, a mass ratio of the carbon-coated second micrometer-sized silicon particles to the graphene oxide is 2:1 to 3:1.

In the mixed solution, a concentration of graphene oxide is 1.5 mol/l to 2 mol/l.

In some embodiments, the second mixed solvent is a mixture of water and ethanol. A volume ratio of water to ethanol in the second mixed solvent can be 0.8:1 to 1:1.

In some embodiments, a temperature of the hydrothermal reaction is 180 °C to 200 °C. A period of the hydrothermal reaction is 6 h to 10 h.

In step S15, the composite hydrogel is heated to remove water from the composite hydrogel, so as to obtain the composite anode material.

During the water removal process, the reduced graphene oxide in the composite hydrogel is compacted to form a dense three-dimensional network. The carbon-coated second micrometer-sized silicon particles are dispersed in the three-dimensional network of the reduced graphene oxide.

In some embodiments, a temperature for removing water is 60 °C to 80 °C, and a period for removing water is 24 h to 48 h.

A composite anode material prepared by the above-described method is also provided according to some embodiments of the present application. A density of the composite anode material is 0.8 g/cm³ to 1.2 g/cm³.

A micrometer-scale area on the composite anode material is selected. Mechanical properties of the composite anode material within the micrometer-scale area are then measured. Test results show that within the micrometer-scale area, the composite anode material shows a high yield strength greater than 150 MPa and a yield strain of 8.6%. Similarly, in the nano-scale area, the composite anode material exhibits a strength higher than 1.7 GPa and a high plasticity of 15%.

An anode is also provided according to some embodiments of the present application, which includes the composite anode material.

A lithium-ion battery is also provided according to some embodiments of the present application, which includes a cathode and the above anode.

The present application will be described in detail in combination with specific examples and comparative examples.

### Example 1

At a first step, micrometer-sized silicon particles (SiMP) of 1.0 g were placed in a crucible. The micrometer-sized silicon particles had a particle size ranging from 3 µm to 5 µm. The crucible containing the micrometer-sized silicon particles was transferred to a tubular furnace. The tubular furnace was heated to 1000 °C at a heating rate of 10 °C/min. A flow rate of argon was 50 mL/min. Then, methane gas was introduced into the tubular furnace at this temperature, with a flow rate of 50 ml/min. The period for the reaction time was 60 min. After the reaction, the introduction of the methane gas was stopped, and the flow rate of argon was remained unchanged. The tubular furnace was then cooled to 400 °C at the rate of 10 °C/min, and then naturally cooled to the room temperature to obtain carbon-coated first micrometer-sized silicon particles.

At a second step, the carbon-coated first micrometer-sized silicon particles of 500 mg were ultrasonically dispersed in a mixed solvent of 100 ml water and 100 ml ethanol. Then, a uniform dispersed solution was obtained.

At a third step, sodium hydroxide of 6 g was added to the dispersed solution. The dispersed solution was heated to a temperature of 80 °C, and the temperature was maintained for 15 min. When there were bubbles in the dispersed solution, the dispersed solution was ultrasonically treated for 5 min and filtered, washed alternately by water and ethanol, and dried at 70 °C. Then, carbon-coated second micrometer-sized silicon particles (SiMP@C) were obtained.

At a fourth step, the SiMP@C of 300 mg and graphene oxide of 150 mg were ultrasonically dispersed in a mixed solvent of 50 ml water and ethanol of 50 ml. Then, a mixed solution was obtained. The mixed solution was added into a hydrothermal reactor, and subjected to a hydrothermal reaction at 180 °C for 6 h. Then, a composite hydrogel of reduced graphene oxide, silicon, and carbon was obtained.

At a fifth step, the obtained composite hydrogel was dried at 70 °C for 24 h. Then, a composite anode material of micrometer-sized carbon-coated silicon (SiMP@C-GN) was obtained.

### Example 2

A difference between example 2 and example 1 is that the flow rate of methane was 30 ml/min.

### Example 3

A difference between example 3 and example 1 is that at the first step, the tubular furnace was heated to 950 °C at a heating rate of 7 °C/min. A flow rate of argon was 40 ml/min. Then, methane gas was introduced at this temperature at a flow rate of 50 ml/min. The period for the reaction was 40 min. After the reaction, the introduction of methane gas was stopped, and the flow rate of argon was remained unchanged. The tubular furnace was cooled to 400 °C at a rate of 7 °C/min, and then naturally cooled to the room temperature.

### Example 4

A difference between example 4 and example 1 is that the amount of SiMP@C used at the fourth step was 400 mg. The amount of water was 40 ml, and the amount of ethanol was 60 ml.

### Example 5

A difference between example 5 and example 1 is that the amount of sodium hydroxide used at the third step was 4 g.

### Example 6

A difference between example 6 and example 1 is that the sodium hydroxide was replaced with potassium hydroxide at the third step.

### Example 7

A difference between example 7 and example 1 is that when bubbles were generated in the dispersed solution, the ultrasonic treatment was performed for 8 min.

### Example 8

A difference between example 8 and example 1 is that the amount of SiMP@C used at the fourth step was 250 mg. The amount of water was 60ml, and the amount of ethanol was 40 ml.

### Example 9

A difference between example 9 and example 1 is that the amount of graphene oxide used at the fourth step is 170 mg.

### Example 10

A difference between example 10 and example 1 is that the drying temperature at the fifth step is 80 °C.

### Comparative example 1

The carbon-coated first micrometer-sized silicon particles, which were obtained at the first step of example 1, were directly used as an anode material.

### Comparative example 2

The carbon-coated second micrometer-sized silicon particles (SiMP@C), which were obtained at the third step of example 1, were directly used as an anode material.

### Comparative example 3

At a first step, micrometer-sized silicon particles of 1.0 g were placed in a crucible. The micrometer-sized silicon particles had a particle size ranging from 3 µm to 5 µm. The crucible containing the micrometer-sized silicon particles was transferred to a tubular furnace. The tubular furnace was heated to 1000 °C at a heating rate of 10 °C/min. A flow rate of argon was 50 ml/min. Then, methane gas was introduced into the tubular furnace at this temperature, with a flow rate of 50 ml/min. The period for the reaction time was 60 min. After the reaction, the introduction of the methane gas was stopped, and the flow rate of argon was remained unchanged. The tubular furnace was then cooled to 400 °C at the rate of 10 °C/min, and then naturally cooled to the room temperature to obtain carbon-coated first micrometer-sized silicon particles.

At a second step, the carbon-coated first micrometer-sized silicon particles of 300 mg and graphene oxide of 150 mg were ultrasonically dispersed into a mixed solution of 50 ml water and 50 ml ethanol. Thus, the mixed solution was obtained. Then, the mixed solution was added to a hydrothermal reactor, and subjected to a hydrothermal reaction at 180 °C for 6 h. Then, a composite hydrogel was obtained.

At a third step, the obtained composite hydrogel was dried at 70 °C for 24 h. Then, a composite anode material (SiMP@C-GN) was obtained.

### Comparative example 4

A difference between comparative example 4 and example 1 is that the silicon particles, which had a particle size ranging from 3 µm to 5 µm used at the first step, was replaced with nano-sized silicon particles.

### Comparative example 5

The first to third steps in comparative example 5 were the same as those in example 1. Such detail steps were shown at example 1.

At a fourth step, the SiMP@C of 300 mg and graphene oxide of 150 mg were ultrasonically dispersed in a mixed solvent of 50 ml water and 50 ml ethanol. Then, the mixture was filtered by vacuum extraction, and then dried at 70 °C to obtain a composite material.

At a fifth step, the composite material was heated at 800 °C for 2 h, at a flow rate of argon of 50 ml/min. The heating rate was 5 °C/min. Then, a composite anode material was obtained.

Referring to FIG. 1, in the composite anode material prepared in example 1, the carbon coating in the carbon-coated second micrometer-sized silicon particles (SiMP@C) has a good coating performance for the internal silicon particles. A suitable space is reserved therebetween.

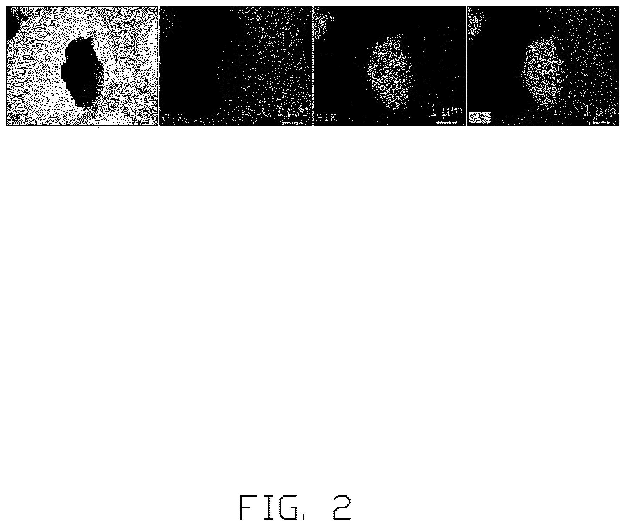

Referring to FIG 2, in the anode material prepared in comparative example 3, the carbon coating in the carbon-coated first micrometer-sized silicon particles has a poor coating performance for the internal silicon particles. The spaces therebetween are quite different at different positions.

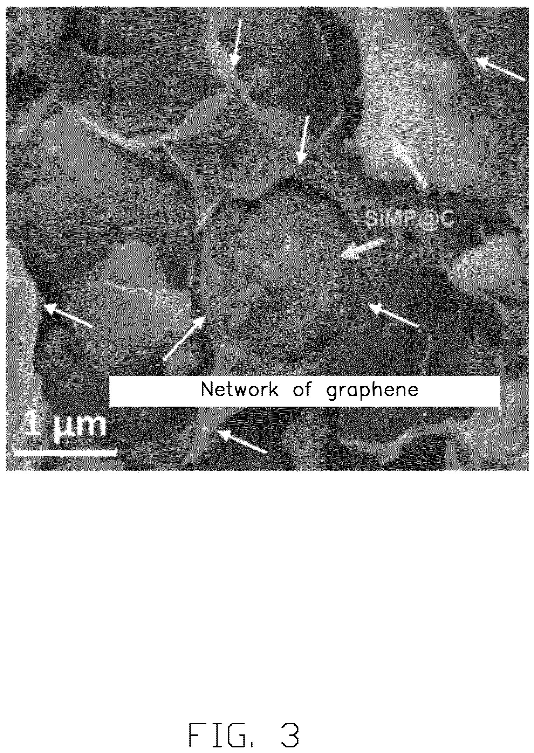

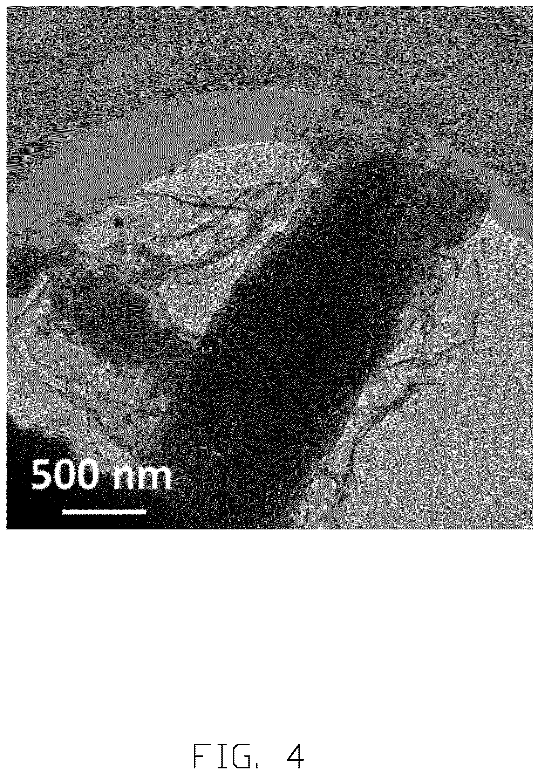

Referring to FIGS. 3 and 4, in the composite anode material prepared in example 1, a continuous and dense network of the reduced graphene oxide closely connects the internal micrometer-sized silicon/carbon active particles together, and firmly limits the positions of the internal micrometer-sized silicon/carbon active particles.

The micrometer-sized silicon particles (SiMP), the carbon-coated second micrometer-sized silicon particles (SiMP@C), and the composite anode material (SiMP@C-GN) prepared in different steps in example 1 were further respectively used to manufacture anodes of lithium-ion batteries. The cycle performances were tested.

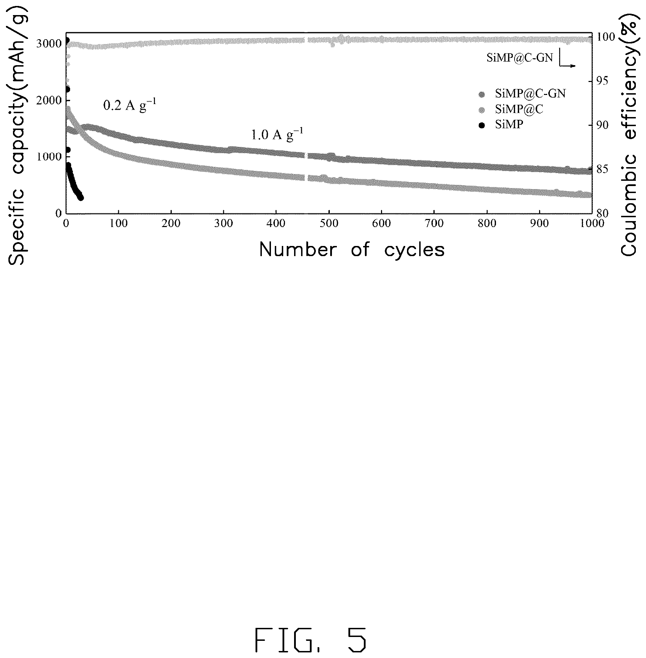

Referring to FIG 5, at a current density of 1A/g, the electrode manufactured by SiMP@C-GN maintains a specific capacity of 750 mAh/g after 1000 cycles. For comparison, the electrode manufactured by SiMP@C only has a specific capacity of 300 mAh/g after 1000 cycles. The electrode manufactured by SiMP has a specific capacity less than 400 mAh/g only after 20 cycles. Thus, the multilayer buffer structure formed by the composite anode material is effective. The continuous and dense network of the reduced graphene oxide also at the outside layer function as a conductive and buffer network.

Other anodes were prepared by mixing the materials of examples 1-10 and comparative examples 1-4 together with conductive carbon and binder SBR according to a mass ratio of 96:2:2. A lithium sheet was used as a counter electrode to assemble a half cell. Electrolyte was also used, including vinyl carbonate/diethyl carbonate (EC/DEC, 1:1, v/v) containing 10 vol% fluoroethylene carbonate (FEC) and 1 vol% vinylene carbonate (VC) additives. The performance results tested under a current density of 1A/g current density are shown in Table 1 below.

**Table 1, test results of batteries of example 1-10 and comparative example 1-5**

| Group | Density of material (g/cm³) | Amount of silicon (wt) | Specific capacity (mAh/g) | Number of cycles | Cycle retention rate |
|---|---|---|---|---|---|
| Exam.1 | 1.0 | 66% | 750 | 1000 | 50% |
| Exam.2 | 1.1 | 71% | 700 | 1000 | 41% |
| Exam.3 | 1.1 | 70% | 650 | 1000 | 43% |
| Exam.4 | 1.1 | 72% | 680 | 1000 | 44% |
| Exam.5 | 1.2 | 68% | 730 | 1000 | 48% |
| Exam.6 | 1.0 | 67% | 720 | 1000 | 47% |
| Exam.7 | 0.8 | 62% | 600 | 1000 | 53% |
| Exam. 8 | 1.2 | 63% | 720 | 1000 | 52% |
| Exam.9 | 1.0 | 64% | 730 | 1000 | 53% |
| Exam. 10 | 1.0 | 67% | 740 | 1000 | 48% |
| Com. Exam.1 | - | 93% | 320 | 1000 | 19% |
| Com. Exam.2 | - | 82% | 500 | 1000 | 27% |
| Com. Exam.3 | 1.1 | 69% | 480 | 1000 | 31% |
| Com. Exam.4 | 0.3 | 65% | 800 | 1000 | 52% |
| Com. Exam.5 | - | 68% | 430 | 1000 | 28% |

Table 1 shows:
1. By comparing example 1 with examples 2 and 3, when the amount of the carbon coating formed by the chemical vapor deposition decreases, the internal silicon active particles cannot be effectively protected, and the cycle stability of the material decreases.
2. By comparing example 1 with examples 8 and 9 and with comparative examples 1 and 2, when the reduced graphene oxide at the outside layer decreases in amount or even disappears in the composite material, the stress buffer function is weakened, and the cycle stability of the material is reduced.
3. By comparing example 1 with example 7 and comparative example 3, when the etching degree increases, the overall cycle stability of the material is improved, but the capacity decreases since the amount of active material decreases.
4. By comparing example 1 with comparative example 4, when nano-sized silicon is used as source material, although the cycle performance of the material is slightly improved, its density is much lower than that of the composite material prepared by micrometer-sized silicon. Therefore, the multilayer buffer structure in the application can obtain a higher volumetric performance when applied to the micrometer-sized silicon anode.

The composite anode material prepared by the method in the present application has a strong and tough multilayer buffer structure. The buffer structure stabilizes the micrometer-sized silicon particles that crushed during the cycle process, and can resist the pressure during the calendering of the electrode.

Specifically, the inner carbon coating that is highly graphitized and the appropriate space have excellent mechanical flexibility, which can effectively stabilize the internal micrometer-sized silicon particles, and protect the exposed fresh surface when the micrometer-sized silicon particles are broken. The outer network formed by the reduced graphene oxide that is dense and contracted closely connects the internal carbon-coated second micrometer-sized silicon particles (SiMP@C) together as a whole of a mechanic and electric. Thus, the strength and toughness of the electrode increase, so as to realize effective mechanical buffer and continuous and rapid electron transfer in the process of lithiation/delithiation. At the same time, the dense network with high-strength and high modulus formed by the assembling and stacking of the reduced graphene oxide, can maintain the structural integrity of the internal silicon-carbon active particles to a greatest extent during the calendering.

In addition, the micrometer-sized silicon anode (with a compacted density of 1.0 g/cm³), when manufactured by the composite anode material prepared in the present application, can obtain a long cycle life of 1000 cycles and maintain a high capacity (750 mAh/g). Thus, the composite anode material has a great significance for the practicability of the micrometer-sized silicon anode.

The embodiments shown and described above are only examples. Therefore, many commonly-known features and details are neither shown nor described. Even though numerous characteristics and advantages of the present technology have been set forth in the foregoing description, together with details of the structure and function of the present application, the disclosure is illustrative only, and changes may be made in the detail, including in matters of shape, size, and arrangement of the parts within the principles of the present application, up to and including the full extent established by the broad general meaning of the terms used in the claims. It will, therefore, be appreciated that the embodiments described above may be modified within the scope of the claims.

## Claims

1. A preparation method of a composite anode material of micrometer-sized carbon-coated silicon, **characterized in that**, the preparation method comprises:
subjecting micrometer-sized silicon particles to a chemical vapor deposition reaction under a gas atmosphere containing carbon, to obtain carbon-coated first micrometer-sized silicon particles, wherein a mass ratio of carbon in the carbon-coated first micrometer-sized silicon particles is 7% to 18%;
dispersing the carbon-coated first micrometer-sized silicon particles in a first mixed solvent to obtain a dispersed solution;
adding alkali into the dispersed solution and heating the dispersed solution, causing the alkali to etch a portion of the micrometer-sized silicon particles in the carbon-coated first micrometer-sized silicon particles to obtain carbon-coated second micrometer-sized silicon particles;
dispersing the carbon-coated second micrometer-sized silicon particles and graphene oxide in a second mixed solvent to obtain a mixed solution, and subjecting the mixed solution to a hydrothermal reaction to obtain a composite hydrogel of reduced graphene oxide, silicon, and carbon; and
heating the composite hydrogel to remove water from the composite hydrogel, thereby obtaining the composite anode material.

2. The preparation method according to claim 1, **characterized in that**, the chemical vapor deposition reaction comprises:
a heating stage under an argon atmosphere, wherein a flow rate of argon is 30 ml/min to 50 ml/min, and a heating rate is 5 °C/min to 10 °C/min;
a constant temperature stage under a mixed atmosphere of methane and argon, wherein a flow rate of methane is 30 ml/min to 50 ml/min, a flow rate of argon is 30 ml/min to 50 ml/min, a temperature of the constant temperature stage is 900 °C to 1000 °C, and a period for the constant temperature stage is 40 min to 60 min; and
a cooling stage under an argon atmosphere, wherein a flow rate of argon is 30 ml/min to 50 ml/min, and a cooling rate is 5 °C/min to 10 °C/min, and the cooling stage also comprises a natural cooling stage to room temperature.

3. The preparation method according to claim 1, **characterized in that**, the first mixed solvent is a mixture of water and ethanol, a volume ratio of water and ethanol in the first mixed solvent is 0.8:1 to 1:1; the second mixed solvent is a mixture of water and ethanol, a volume ratio of water and ethanol in the second mixed solvent is 0.8:1 to 1:1.

4. The preparation method according to claim 1, **characterized in that**, a concentration of the carbon-coated first micrometer-sized silicon particles in the dispersed solution is 1 mg/ml to 3 mg/ml.

5. The preparation method according to claim 1, **characterized in that**, a concentration of the alkali in the dispersed solution is 0.5 mol/l to 1 mol/l, and a heating temperature of the dispersed solution is 70 °C to 80 °C.

6. The preparation method according to claim 1, **characterized in that**, a mass ratio of the carbon-coated second micrometer-sized silicon particles to the graphene oxide is 2:1 to 3:1, and a concentration of the graphene oxide in the mixed solution is 1.5 mol/l to 2 mol/l.

7. The preparation method according to claim 1, **characterized in that**, a temperature of the hydrothermal reaction is 180 °C to 200 °C, and a period of the hydrothermal reaction is 6 h to 10 h.

8. A composite anode material of micrometer-sized carbon-coated silicon prepared by the preparation method according to any one of claims 1 to 7, wherein a density of the composite anode material is 0.8 g/cm³ to 1.2 g/cm³.

9. An anode, **characterized in that**, the anode comprises the composite anode material of micrometer-sized carbon-coated silicon according to claim 8.

10. A lithium-ion battery comprising a cathode, **characterized in that**, the lithium-ion battery further comprises the anode according to claim 9.

## Patentansprüche

1. Ein Herstellungsverfahren für ein negatives Verbundelektrodenmaterial aus mit Kohlenstoff beschichtetem Silizium in Mikrometergröße, **dadurch gekennzeichnet, dass** das Herstellungsverfahren die folgenden Schritte umfasst:
das Unterziehen von Siliziumpartikeln in Mikrometergröße einer Reaktion der chemischen Gasphasenabscheidung unter einer kohlenstoffhaltigen Gasatmosphäre, um erste mit Kohlenstoff beschichtete Siliziumpartikel in Mikrometergröße zu erhalten, wobei ein Massenanteil von Kohlenstoff in den ersten mit Kohlenstoff beschichteten Siliziumpartikeln in Mikrometergröße 7 % bis 18 % beträgt;
das Dispergieren der ersten mit Kohlenstoff beschichteten Siliziumpartikel in Mikrometergröße in einem ersten Lösungsmittelgemisch, um eine dispergierte Lösung zu erhalten;
das Zugeben von Alkali zu der dispergierten Lösung und das Erhitzen der dispergierten Lösung, wodurch das Alkali einen Teil der Siliziumpartikel in Mikrometergröße in den ersten mit Kohlenstoff beschichteten Siliziumpartikeln in Mikrometergröße ätzt, um zweite mit Kohlenstoff beschichtete Siliziumpartikel in Mikrometergröße zu erhalten;
das Dispergieren der zweiten mit Kohlenstoff beschichteten Siliziumpartikel in Mikrometergröße und von Graphenoxid in einem zweiten Lösungsmittelgemisch, um eine gemischte Lösung zu erhalten, und das Unterziehen der gemischten Lösung einer hydrothermalen Reaktion, um ein Verbundhydrogel aus reduziertem Graphenoxid, Silizium und Kohlenstoff zu erhalten; und
das Erhitzen des Verbundhydrogels, um Wasser aus dem Verbundhydrogel zu entfernen, wodurch das negative Verbundelektrodenmaterial erhalten wird.

2. Das Herstellungsverfahren nach Anspruch 1, **dadurch gekennzeichnet, dass** die Reaktion der chemischen Gasphasenabscheidung umfasst:
eine Heizstufe unter einer Argonatmosphäre, wobei eine Durchflussrate von Argon 30 ml/min bis 50 ml/min beträgt und eine Heizrate 5 °C/min bis 10 °C/min beträgt;
eine Konstanttemperaturstufe unter einer gemischten Atmosphäre aus Methan und Argon, wobei eine Durchflussrate von Methan 30 ml/min bis 50 ml/min beträgt, eine Durchflussrate von Argon 30 ml/min bis 50 ml/min beträgt, eine Temperatur der Konstanttemperaturstufe 900 °C bis 1000 °C beträgt und eine Dauer für die Konstanttemperaturstufe 40 min bis 60 min beträgt; und
eine Abkühlstufe unter einer Argonatmosphäre, wobei eine Durchflussrate von Argon 30 ml/min bis 50 ml/min beträgt und eine Abkühlrate 5 °C/min bis 10 °C/min beträgt, und die Abkühlstufe auch eine natürliche Abkühlung auf Raumtemperatur umfasst.

3. Das Herstellungsverfahren nach Anspruch 1, **dadurch gekennzeichnet, dass** das erste Lösungsmittelgemisch eine Mischung aus Wasser und Ethanol ist, wobei ein Volumenverhältnis von Wasser und Ethanol in dem ersten Lösungsmittelgemisch 0.8:1 bis 1:1 beträgt; das zweite Lösungsmittelgemisch eine Mischung aus Wasser und Ethanol ist, wobei ein Volumenverhältnis von Wasser und Ethanol in dem zweiten Lösungsmittelgemisch 0.8:1 bis 1:1 beträgt.

4. Das Herstellungsverfahren nach Anspruch 1, **dadurch gekennzeichnet, dass** eine Konzentration der ersten mit Kohlenstoff beschichteten Siliziumpartikel in Mikrometergröße in der dispergierten Lösung 1 mg/ml bis 3 mg/ml beträgt.

5. Das Herstellungsverfahren nach Anspruch 1, **dadurch gekennzeichnet, dass** eine Konzentration des Alkalis in der dispergierten Lösung 0.5 mol/l bis 1 mol/l beträgt und eine Heiztemperatur der dispergierten Lösung 70 °C bis 80 °C beträgt.

6. Das Herstellungsverfahren nach Anspruch 1, **dadurch gekennzeichnet, dass** ein Massenverhältnis der zweiten mit Kohlenstoff beschichteten Siliziumpartikel in Mikrometergröße zu dem Graphenoxid 2:1 bis 3:1 beträgt und eine Konzentration des Graphenoxids in der gemischten Lösung 1.5 mol/l bis 2 mol/l beträgt.

7. Das Herstellungsverfahren nach Anspruch 1, **dadurch gekennzeichnet, dass** eine Temperatur der hydrothermalen Reaktion 180 °C bis 200 °C beträgt und eine Dauer der hydrothermalen Reaktion 6 h bis 10 h beträgt.

8. Ein negatives Elektrodenmaterial aus einem mit Kohlenstoff beschichteten Silizium-Verbundstoff in Mikrometergröße, hergestellt nach dem Herstellungsverfahren nach einem der Ansprüche 1 bis 7, wobei eine Dichte des negativen Elektrodenmaterials aus Verbundstoff 0.8 g/cm³ bis 1.2 g/cm³ beträgt.

9. Eine negative Elektrodenplatte, **dadurch gekennzeichnet, dass** die negative Elektrodenplatte das negative Elektrodenmaterial aus einem mit Kohlenstoff beschichteten Silizium-Verbundstoff in Mikrometergröße nach Anspruch 8 umfasst.

10. Eine Lithium-Ionen-Batterie, umfassend eine Kathode, **dadurch gekennzeichnet, dass** die Lithium-Ionen-Batterie ferner die negative Elektrodenplatte nach Anspruch 9 umfasst.

## Revendications

1. Un procédé de préparation d'un matériau d'électrode négative composite de silicium-carbone micrométrique, **caractérisé en ce que** le procédé de préparation comprend les étapes consistant à:
soumettre des particules de silicium micrométriques à une réaction de dépôt chimique en phase vapeur sous une atmosphère gazeuse contenant du carbone, pour obtenir des premières particules de silicium micrométriques revêtues de carbone, un rapport en masse du carbone dans les premières particules de silicium micrométriques revêtues de carbone étant de 7 % à 18 %;
disperser les premières particules de silicium micrométriques revêtues de carbone dans un premier solvant mixte pour obtenir une solution dispersée;
ajouter un alcali dans la solution dispersée et chauffer la solution dispersée, amenant l'alcali à graver une partie des particules de silicium micrométriques dans les premières particules de silicium micrométriques revêtues de carbone pour obtenir des deuxièmes particules de silicium micrométriques revêtues de carbone;
disperser les deuxièmes particules de silicium micrométriques revêtues de carbone et de l'oxyde de graphène dans un deuxième solvant mixte pour obtenir une solution mixte, et soumettre la solution mixte à une réaction hydrothermale pour obtenir un hydrogel composite d'oxyde de graphène réduit, de silicium et de carbone; et
chauffer l'hydrogel composite pour éliminer l'eau de l'hydrogel composite, afin d'obtenir ainsi le matériau d'électrode négative composite.

2. Le procédé de préparation selon la revendication 1, **caractérisé en ce que** la réaction de dépôt chimique en phase vapeur comprend:
une étape de chauffage sous une atmosphère d'argon, dans laquelle un débit d'argon est de 30 ml/min à 50 ml/min, et une vitesse de chauffage est de 5 °C/min à 10 °C/min;
une étape à température constante sous une atmosphère mixte de méthane et d'argon, dans laquelle un débit de méthane est de 30 ml/min à 50 ml/min, un débit d'argon est de 30 ml/min à 50 ml/min, une température de l'étape à température constante est de 900 °C à 1000 °C, et une durée pour l'étape à température constante est de 40 min à 60 min; et
une étape de refroidissement sous une atmosphère d'argon, dans laquelle un débit d'argon est de 30 ml/min à 50 ml/min, et une vitesse de refroidissement est de 5 °C/min à 10 °C/min, et l'étape de refroidissement comprend également une étape de refroidissement naturel jusqu'à la température ambiante.

3. Le procédé de préparation selon la revendication 1, **caractérisé en ce que** le premier solvant mixte est un mélange d'eau et d'éthanol, un rapport en volume de l'eau et de l'éthanol dans le premier solvant mixte étant de 0.8:1 à 1:1; le deuxième solvant mixte est un mélange d'eau et d'éthanol, un rapport en volume de l'eau et de l'éthanol dans le deuxième solvant mixte étant de 0.8:1 à 1:1.

4. Le procédé de préparation selon la revendication 1, **caractérisé en ce que** une concentration des premières particules de silicium micrométriques revêtues de carbone dans la solution dispersée est de 1 mg/ml à 3 mg/ml.

5. Le procédé de préparation selon la revendication 1, **caractérisé en ce que** une concentration de l'alcali dans la solution dispersée est de 0,5 mol/l à 1 mol/l, et une température de chauffage de la solution dispersée est de 70 °C à 80 °C.

6. Le procédé de préparation selon la revendication 1, **caractérisé en ce que** un rapport en masse des deuxièmes particules de silicium micrométriques revêtues de carbone sur l'oxyde de graphène est de 2:1 à 3:1, et une concentration de l'oxyde de graphène dans la solution mixte est de 1.5 mol/l à 2 mol/l.

7. Le procédé de préparation selon la revendication 1, **caractérisé en ce que** une température de la réaction hydrothermale est de 180 °C à 200 °C, et une durée de la réaction hydrothermale est de 6 h à 10 h.

8. Un matériau d'électrode négative composite de silicium-carbone micrométrique préparé par le procédé de préparation selon l'une quelconque des revendications 1 à 7, dans lequel une masse volumique du matériau d'électrode négative composite est de 0.8 g/cm³ à 1.2 g/cm³.

9. Une plaque d'électrode négative, **caractérisée en ce qu'**elle comprend le matériau d'électrode négative composite de silicium-carbone micrométrique selon la revendication 8.

10. Une batterie au lithium-ion comprenant une cathode, **caractérisée en ce que** la batterie au lithium-ion comprend en outre l'électrode négative selon la revendication 9.
